# EUROPÄISCHE PATENTSCHRIFT

(11) **EP 2 948 285 B1**
(45) Veröffentlichungstag und Bekanntmachung des Hinweises auf die Patenterteilung: **19.09.2018**
(21) Anmeldenummer: 14705970.3
(22) Anmeldetag: 22.01.2014
(51) Int. Cl.: B29C 44/06, B29C 44/08, B29C 44/12, B29C 44/44, B29K 23/00, B29K 25/00

(54) **PARTIKELSCHAUM-BAUTEIL MIT INTEGRIERTER BEFESTIGUNG UND VERFAHREN ZU SEINER HERSTELLUNG**
PARTICLE FOAM COMPONENT HAVING INTEGRATED FASTENING AND METHOD FOR PRODUCTION THEREOF
PIÈCE EN MOUSSE DE PARTICULES À FIXATION INCORPORÉE ET PROCÉDÉ DE FABRICATION DE LADITE PIÈCE

(30) Priorität: 25.01.2013 DE 102013001233
(43) Veröffentlichungstag der Anmeldung: 02.12.2015
(73) Patentinhaber: Krallmann Kunststoffverarbeitung GmbH, 32120 Hiddenhausen (DE)
(72) Erfinder: BREXELER, Ingo, 58300 Wetter / Ruhr (DE); ZEIFANG, Roland, 77790 Steinach (DE); DOLL, Thomas, 77704 Oberkirch (DE)
(74) Vertreter: Lichti - Patentanwälte Partnerschaft mbB
(86) Internationale Anmeldenummer: PCT/EP2014/000158
(87) Internationale Veröffentlichungsnummer: WO 2014/114449

(56) Entgegenhaltungen:
- DE-A1- 10 036 185
- JP-A- S58 173 630
- US-A1- 2011 097 569

## Beschreibung

Die Erfindung betrifft ein Partikelschaum-Bauteil mit einem eingebetteten Befestigungselement aus einem thermo-plastischen oder einem elastomeren Kunststoff.

Ferner betrifft die Erfindung ein Verfahren zur Herstellung eines Partikelschaum-Bauteils mit eingebetteter Befestigungsvorrichtung.

Partikelschaum-Bauteile aus aufgeschäumtem Kunststoff sind in verschiedenen Ausgestaltungen bekannt und finden in vielen Industriebereichen Verwendung, da sie wesentliche Vorteile hinsichtlich Gewicht und Isolierung besitzen. Sie werden beispielsweise in Automobilindustrie vielfach zur Gewichtseinsparung gegenüber metallenen Bauteilen oder als Isolier-Bauteil gegen den Schall, Wärme oder mechanische Belastung eingesetzt. Nachteilig dabei ist jedoch, dass es relativ schwierig ist, ein Befestigungselement an dem Partikelschaum-Bauteil anzubringen, das ausreichend große Kräfte überträgt.
Es ist bekannt, als Befestigung in ein Partikelschaum-Bauteil nachträglich einen Dübel einzuschrauben, der jedoch nur geringe Kräfte aufnehmen kann und bei dem die Gefahr besteht, dass er bei Belastung ausreißt.
Alternativ ist es bekannt, ein Befestigungselement vorzufertigen und mit dem Partikelschaum zu umschäumen. Die Verbindung zwischen der Befestigung und dem Schaum wird über Formschluss erreicht, der jedoch große Oberflächen und somit viel Material und viel Gewicht erfordert, um ausreichende Kräfte übertragen zu können.

In der US-A-2011/0097569, von der als Stand der Technik ausgegangen wird, ist ein Partikelschaum-Bauteil gezeigt und beschrieben. Dabei ist vorgesehen, dass ein Befestigungselement in eine Umhüllung aus einem 1. Partikelschaum eines 1. Kunststoffes eingebettet ist und die Umhüllung ihrerseits in ein Formteil aus einem 2. Partikelschaum eines 2. Kunststoffs eingebettet ist. Um das Befestigungselement in der Umhüllung zu halten, ist eine Klebstoffschicht vorgesehen, die für die Verbindung der beiden Bauteile sorgt. Der Klebstoff wird auf das Befestigungselement aufgebracht und anschließend zu einer Klebstoffschicht umgebildet.

Der Erfindung liegt die Aufgabe zugrunde, ein Partikelschaum-Bauteil zu schaffen, bei dem ein Befestigungselement in einfacher Weise sicher in dem Partikelschaum-Bauteil aufgenommen ist. Ferner soll ein Verfahren geschaffen werden, mit dem sich ein entsprechendes Partikelschaum-Bauteil in einfacher Weise herstellen lässt.

Die vorstehend genannte Aufgabe wird hinsichtlich des Partikelschaum-Bauteils erfindungsgemäß durch ein Partikelschaum-Bauteil mit den Merkmalen des Anspruchs 1 gelöst. Dabei ist vorgesehen, dass das Befestigungselement, das aus einem vorzugsweise verdichteten thermoplastischen oder einem elastomeren Kunststoff besteht, zumindest abschnittsweise von einer Umhüllung aus einem 1. Partikelschaum eines 1. Kunststoffs umgeben ist, wobei in einer 1. Kontaktfläche zwischen dem Befestigungselement und der Umhüllung ein stoffschlüssiger oder ein form- und stoffschlüssiger Materialverbund gegeben ist, und dass zumindest die Umhüllung zumindest abschnittsweise von einem Formteil aus einem 2. Partikel-schaum eines 2. Kunststoffs umgeben ist, wobei in einer 2. Kontaktfläche zwischen der Umhüllung und dem Formteil ein stoffschlüssiger Materialverbund gegeben ist.

Erfindungsgemäß wird von der Grundüberlegung ausgegangen, das Befestigungselement, bei dem es sich beispielsweise um einen Dübel oder einen Rastdorn oder eine Gewindestange handeln kann, nicht oder zumindest nicht ausschließlich mit dem 2. Partikelschaum zu verbinden, der das Formteil und somit das eigentliche Bauteil bildet, sondern eine Umhüllung aus einem 1. Partikelschaum dazwischen zu schalten. Die Umhüllung ist mit dem Befestigungselement stoffschlüssig oder form- und stoffschlüssig verbunden, so dass an dieser 1. Kontaktfläche relativ große Kräfte übertragen werden können.

Die Verbindung zwischen dem Formteil aus dem 2. Partikelschaum und der Umhüllung aus dem 1. Partikelschaum ist relativ großflächig und es besteht ein stoffschlüssiger Materialverbund. Aufgrund dieser relativ großen 2. Kontaktfläche zwischen der Umhüllung und dem Formteil sind die Auswahlmöglichkeiten für den 2. Partikelschaum wesentlich größer, da dieser nicht nach dem Kriterium ausgewählt werden muss, dass er mit dem Befestigungselement über eine relativ kleine Fläche große Kräfte übertragen muss.

Darüber hinaus besteht der Vorteil, dass das Befestigungselement mit der Umhüllung vorgefertigt und nachträglich mit dem das Formteil bildenden 2. Partikelschaum umgeben werden kann.

Der 1. Partikelschaum zur Bildung der Umhüllung kann in seinen Eigenschaften speziell darauf abgestellt werden, dass er mit dem Material des Befestigungselementes eine gute stoffschlüssige oder form- und stoffschlüssige Verbindung eingeht. Vorzugsweise ist der den 1. Partikelschaum bildende 1. Kunststoff ein expandiertes Polyprophylen (EPP) oder ein expandiertes Polystyrol (EPS).

Der den 2. Partikelschaum bildende 2. Kunststoff des Formteils wird überwiegend danach ausgewählt, welche Eigenschaften und Festigkeiten das Formteil haben soll. Vorzugsweise ist der 2. Kunststoff ein expandiertes Polyprophylen (EPP) oder ein expandiertes Polystyrol (EPS).

In Weiterbildung der Erfindung ist vorgesehen, dass der 1. Kunststoff und der 2. Kunststoff aus unterschiedlichen Materialien bestehen. Dies wird der Regelfall sein, da der 1. Kunststoff speziell die Aufgabe hat, sich mit dem Kunststoffmaterial des Befestigungselementes in guter Weise stoffschlüssig zu verbinden und eine großflächige Umhüllung zu bilden, die eine großflächige 2. Kontaktfläche zur Verbindung mit dem Formteil bereitstellt. Der 2. Kunststoff bildet das Formteil und wird insbesondere im Hinblick auf die gewünschten Festigkeits- und Isolationseigenschaften des Formteils sowie im Hinblick auf eine gute Verbindung mit der Umhüllung ausgewählt werden.

In einer möglichen Ausgestaltung der Erfindung kann aber auch vorgesehen sein, dass der 1. Kunststoff und der 2. Kunststoff aus gleichen Materialien, beispielsweise jeweils aus EPP oder jeweils aus EPS bestehen, wobei die Materialien jedoch unterschiedliche Eigenschaften besitzen. Bei den unterschiedlichen Eigenschaften kann es sich insbesondere um eine unterschiedliche Dichte und/oder eine unterschiedliche Farbe handeln.

Hinsichtlich des Verfahrens wird die oben genannte Aufgabe durch das Verfahren mit den Merkmalen des Anspruchs 7 gelöst. Dabei ist vorgesehen, dass eine Befestigungsvorrichtung aus einem Befestigungselement, das aus einem thermoplastischen oder elastomeren Kunststoff besteht, und einer das Befestigungselement zumindest teilweise umgebenden Umhüllung aus einem 1. Partikelschaum eines 1. Kunststoffs gebildet wird, wobei in einer 1. Kontaktfläche zwischen dem Befestigungselement und der Umhüllung ein stoffschlüssiger oder form- und stoffschlüssiger Materialverbund gegeben ist. In einem nachfolgenden Verfahrensschritt wird das mit der Umhüllung versehene Befestigungselement in ein Werkzeug eingelegt und zumindest die Umhüllung wird mit einem Formteil aus einem 2. Partikelschaum eines 2. Kunststoffs umgeben, wobei in einer 2. Kontaktfläche zwischen der Umhüllung und dem Formteil ein stoffschlüssiger Materialverbund gebildet wird.

Weitere Merkmale und Vorteile des Verfahrens ergeben sich aus der vorstehenden oder nachstehenden Beschreibung, auf die zwecks Vermeidung von Wiederholungen verwiesen wird. Eine Befestigungsvorrichtung zur Einbringung in ein Partikelschaum-Bauteil besitzt ein Befestigungselement aus einem vorzugsweise verdichteten thermoplastischen oder elastomeren Kunststoff und eine das Befestigungselements zumindest abschnittsweise umgebende Umhüllung aus einem 1. Partikelschaum eines 1. Kunststoffs, wobei in einer 1. Kontaktfläche zwischen dem Befestigungselement und der Umhüllung ein stoffschlüssiger oder form- und stoffschlüssiger Materialverbund gegeben ist.

Die Befestigungsvorrichtung kann vorzugsweise im 2-Komponenten-Spritzgussverfahren hergestellt werden. Dabei ist es einerseits möglich, zunächst die Umhüllung aus dem 1. Partikelschaum zu spritzen und dann in einem nachfolgenden Verfahrensschritt das Befestigungselement in die Umhüllung einzuspritzen, andererseits ist es jedoch auch möglich, zunächst das Befestigungselement zu spritzen und in einem nachfolgenden Verfahrensschritt daran die Umhüllung aus dem 1. Partikelschaum anzuspritzen. Alternativ kann das Befestigungselement vorgefertigt sein und dann durch Spritzgießen mit der Umhüllung aus dem 1. Partikelschaum umgeben und verbunden werden.

Vorzugsweise ist der 1. Kunststoff ein expandiertes Polyprophylen (EPP) oder ein expandiertes Polystyrol (EPS).

In einer möglichen Ausgestaltung der Erfindung ist vorgesehen, dass die Umhüllung das Befestigungselement vollständig umringt, wodurch sich relativ große Kräfte übertragen lassen.

Weitere Einzelheiten und Merkmale der Erfindung sind aus der folgenden Beschreibung eines Ausführungsbeispiels unter Bezugnahme auf die Zeichnung ersichtlich. Es zeigen:
- Fig. 1: eine Aufsicht auf eine erfindungsgemäße Befestigungsvorrichtung,
- Fig. 2: einen Schnitt durch die Befestigungsvorrichtung gemäß Figur 1,
- Fig. 3: eine Aufsicht auf ein erfindungsgemäßes Partikelschaum-Bauteil in schematischer Darstellung und
- Fig. 4: einen Schnitt durch das Partikelschaum-Bauteil gemäß Figur 3.

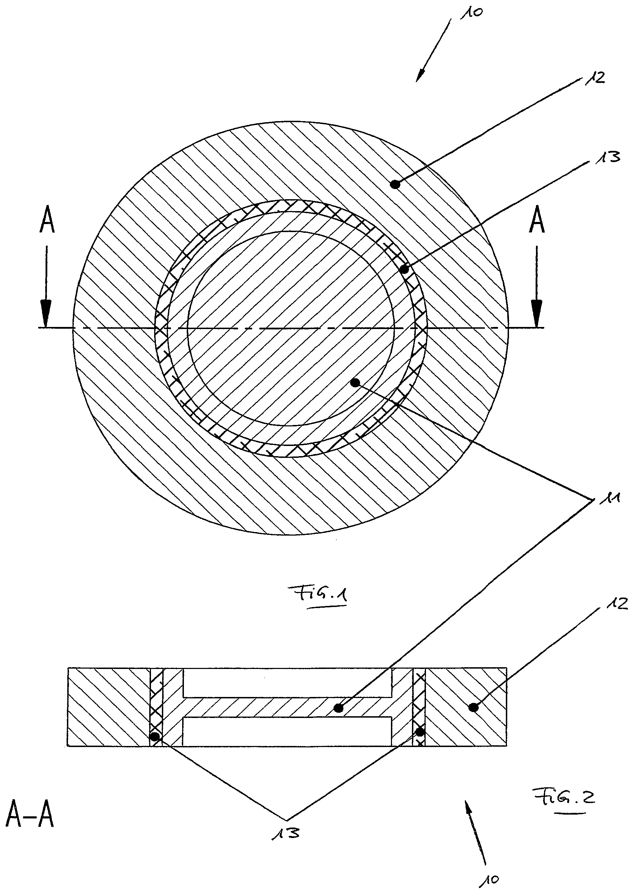

Die Figuren 1 und 2 zeigen eine Befestigungsvorrichtung 10 zur Einbringung in ein Partikelschaum-Bauteil. Die Befestigungsvorrichtung 10 umfasst ein mittiges, nur schematisch dargestelltes Befestigungselement 11, bei dem es sich beispielsweise um einen Montage- oder Befestigungsdorn handeln kann und das aus einem vorzugsweise verdichteten thermoplastischen oder elastomeren Kunststoff besteht. Das Befestigungselement 11 besitzt eine im wesentlichen kreiszylindrische Form und ist auf seiner Umfangs- oder Mantelfläche von einer Umhüllung 12 vollständig umringt, die aus einem 1. Partikelschaum eines 1. Kunststoffs besteht. Bei dem 1. Kunststoff kann es sich um ein expandiertes Polyprophylen (EPP) oder ein expandiertes Polystyrol handeln. Die Umhüllung 12 steht an einer 1. Kontaktfläche 13 mit dem Befestigungselement 11 in Verbindung, wobei an der 1. Kontaktfläche 13 zwischen dem Befestigungselement 11 und der Umhüllung 12 ein stoffschlüssiger oder form- und stoffschlüssiger Materialverbund gegeben ist. Auf diese Weise besitzt die Befestigungsvorrichtung 10 die Form eines Rades, bei dem das Befestigungselement 11 die Nabe und die Umhüllung 12 den Reifen bildet.

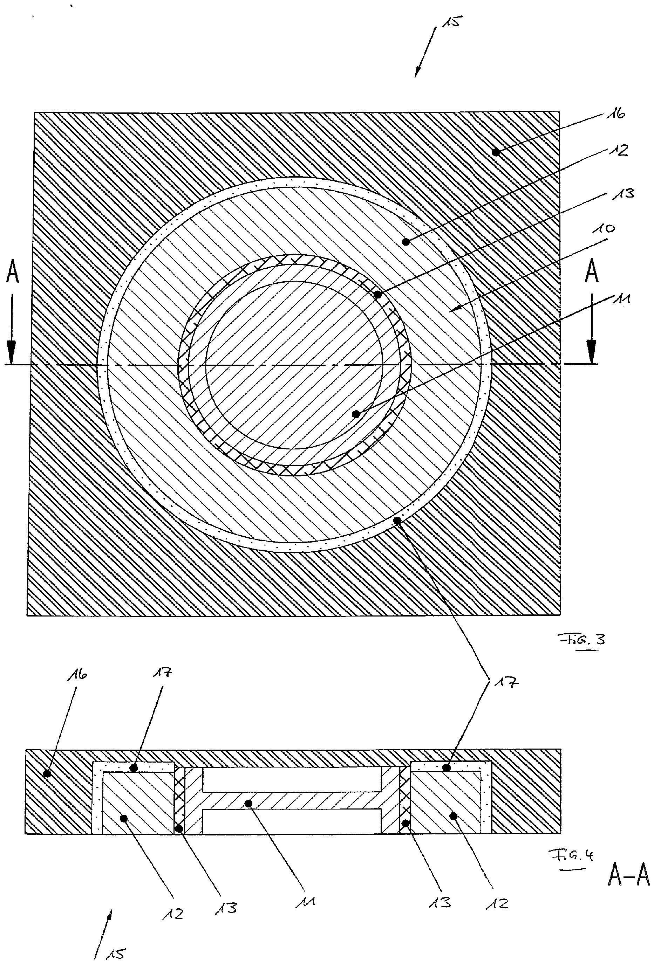

Zur Herstellung eines in den Figuren 3 und 4 schematisch dargestellten Partikelschaum-Bauteils 15 wird die vorgefertigte Befestigungsvorrichtung 10, d.h. das Befestigungselement 11 mit der stoffschlüssig oder form- und stoffschlüssig damit verbundenen Umhüllung 12, in ein Werkzeug eingelegt und mittels eines 2. Partikelschaums aus einem 2. Kunststoff umgeben, wobei das Befestigungselement 11 zumindest auf einer Seite frei bleibt. Der 2. Partikelschaum bildet ein Formteil 16, bei dem es sich beispielsweise um eine Platte handeln kann, wie sie in den Figuren 3 und 4 angedeutet ist. Der 2. Partikelschaum des 2. Kunststoffs steht mit der Umhüllung 12 an einer 2. Kontaktfläche 17 in Verbindung, wobei in der 2. Kontaktfläche 17 zwischen der Umhüllung 12 und dem Formteil 16 ein stoffschlüssiger Materialverbund gegeben ist.

Auch bei dem 2. Partikelschaum bildenden 2. Kunststoff kann es sich um ein expandiertes Polyprophylen (EPP) oder ein expandiertes Polystyrol (EPS) handeln.

## Patentansprüche

1. Partikelschaum-Bauteil (15) mit einem eingebetteten Befestigungselement (11), wobei das Befestigungselement (11) zumindest abschnittsweise von einer Umhüllung (12) aus einem 1. Partikelschaum eines 1. Kunststoffs umgeben ist, wobei zumindest die Umhüllung (12) zumindest abschnittsweise von einem Formteil (16) aus einem 2. Partikelschaum eines 2. Kunststoffs umgeben ist, wobei in einer 2. Kontaktfläche (17) zwischen der Umhüllung (12) und dem Formteil (16) ein stoffschlüssiger Materialverbund gegeben ist, **dadurch gekennzeichnet, dass** das Befestigungselement (11) aus einem thermoplastischen oder elastomeren Kunststoff besteht, dass in einer 1. Kontaktfläche (13) zwischen dem Befestigungselement (11) und der Umhüllung (12) ein stoffschlüssiger oder ein form- und stoffschlüssiger Materialverbund gegeben ist.

2. Partikelschaum-Bauteil nach Anspruch 1, **dadurch gekennzeichnet, dass** der 1. Kunststoff ein expandiertes Polyprophylen (EPP) oder ein expandiertes Polystyrol (EPS) ist.

3. Partikelschaum-Bauteil nach Anspruch 1 oder 2, **dadurch gekennzeichnet, dass** der 2. Kunststoff ein expandiertes Polyprophylen (EPP) oder ein expandiertes Polystyrol (EPS) ist.

4. Partikelschaum-Bauteil nach einem der Ansprüche 1 bis 3, **dadurch gekennzeichnet, dass** der 1. Kunststoff und der 2. Kunststoff aus unterschiedlichen Materialien bestehen.

5. Partikelschaum-Bauteil nach einem der Ansprüche 1 bis 3, **dadurch gekennzeichnet, dass** der 1. Kunststoff und der 2. Kunststoff aus gleichen Materialen unter-schiedlichen Eigenschaften bestehen.

6. Partikelschaum-Bauteil nach Anspruch 5, **dadurch gekennzeichnet, dass** die Materialien eine unterschiedliche Dichte und/oder eine unterschiedliche Farbe aufweisen.

7. Verfahren zur Herstellung eines Partikelschaum-Bauteils (15) mit eingebetteter Befestigungsvorrichtung (10), die aus einem Befestigungselement (11) aus einem thermoplastischen oder einem elastomeren Kunststoff und einer das Befestigungselement (11) zumindest teilweise umgebenden Umhüllung (12) aus einem 1. Partikelschaum eines 1. Kunststoffs gebildet wird, wobei in einer 1. Kontaktfläche (13) zwischen dem Befestigungselement (11) und der Umhüllung (12) ein stoffschlüssiger oder ein form- und stoffschlüssiger Materialbund gebildet wird, und wobei anschließend das mit der Umhüllung (12) versehene Befestigungselement (11) in ein Werkzeug eingelegt und zumindest die Umhüllung (12) mit einem Formteil (16) aus einem 2. Partikelschaum eines 2. Kunststoffs umgeben wird, wobei in einer 2. Kontaktfläche (17) zwischen der Umhüllung (12) und dem Formteil (16) ein stoffschlüssiger Materialverbund gebildet wird.

## Claims

1. Particle foam component (15) with an embedded fastening element (11), wherein the fastening element (11) is surrounded at least in some sections by a wrapping (12) made of a first particle foam of a first plastic, wherein at least the wrapping (12) is surrounded at least in some sections by a molded part (16) made of a second particle foam of a second plastic, wherein there is a bonding in substance in a second contact surface (17) between the wrapping (12) and the molded part (16), **characterized in that** the fastening element (11) consists of a thermoplastic or elastomeric plastic, that there is a bonding in substance or a positive-locking connection and a bonding in substance in a first contact surface (13) between the fastening element (11) and the wrapping (12) .

2. Particle foam component in accordance with claim 1, **characterized in that** the first plastic is an expanded polypropylene (EPP) or an expanded polystyrene (EPS).

3. Particle foam component in accordance with claim 1 or 2, **characterized in that** the second plastic is an expanded polypropylene (EPP) or an expanded polystyrene (EPS).

4. Particle foam component in accordance with one of the claims 1 through 3, **characterized in that** the first plastic and the second plastic consist of different materials.

5. Particle foam component in accordance with one of the claims 1 through 3, **characterized in that** the first plastic and the second plastic consist of the same materials possessing different properties.

6. Particle foam component in accordance with claim 5, **characterized in that** the materials have a different density and/or a different color.

7. Method for producing a particle foam component (15) with embedded fastening device (10), which is formed from a fastening element (11) made of a thermoplastic or elastomeric plastic and a wrapping (12), which at least partially surrounds the fastening element (11) and is made of a first particle foam of a first plastic, and a bonding in substance or a positive-locking connection and a bonding in substance is brought about in a first contact surface (13) between the fastening element (11) and the envelope (12), and wherein the fastening element (11) provided with the wrapping (12) is subsequently placed into a mold and at least the wrapping (12) is surrounded with a molded part (16) made of a second particle foam of a second plastic, and a bonding in substance is brought about in a second contact surface (17) between the wrapping (12) and the molded part (16).

## Revendications

1. Pièce en mousse de particules (15) dotée d'un élément de fixation (11) encastré, l'élément de fixation (11) étant entouré au moins en partie d'une enveloppe (12) fabriquée à partir d'une 1^{re} mousse de particules d'une 1^{re} matière plastique, au moins l'enveloppe (12) étant entourée au moins en partie d'une pièce moulée (16) fabriquée à partir d'une 2^{e} mousse de particules d'une 2^{e} matière plastique, un composite réalisé par complémentarité de matières étant placé dans une 2^{e} surface de contact (17) entre l'enveloppe (12) et la pièce moulée (16), **caractérisée en ce que** l'élément de fixation (11) se compose d'une matière plastique thermoplastique ou élastomère, qu'un composite réalisé par complémentarité de matières ou par complémentarité de formes et de matières est placé dans une 1^{re} surface de contact (13) entre l'élément de fixation (11) et l'enveloppe (12).

2. Pièce en mousse de particules selon la revendication 1, **caractérisée en ce que** la 1^{re} matière plastique est un polypropylène expansé (EPP) ou un polystyrène expansé (EPS).

3. Pièce en mousse de particules selon la revendication 1 ou 2, **caractérisée en ce que** la 2^{e} matière plastique est un polypropylène expansé (EPP) ou un polystyrène expansé (EPS).

4. Pièce en mousse de particules selon l'une quelconque des revendications 1 à 3, **caractérisée en ce que** la 1^{re} matière plastique et la 2^{e} matière plastique se composent de matériaux différents.

5. Pièce en mousse de particules selon l'une quelconque des revendications 1 à 3, **caractérisée en ce que** la 1^{re} matière plastique et la 2^{e} matière plastique se composent des mêmes matériaux ayant des propriétés différentes.

6. Pièce en mousse de particules selon la revendication 5, **caractérisée en ce que** les matériaux présentent une masse volumique différente et/ou une couleur différente.

7. Procédé de fabrication d'une pièce en mousse de particules (15) dotée d'un dispositif de fixation (10) encastré, cette pièce étant formée à partir d'un élément de fixation (11) fabriqué en matière plastique thermoplastique ou élastomère et d'une enveloppe (12) entourant au moins en partie l'élément de fixation (11) et fabriquée à partir d'une 1^{re} mousse de particules d'une 1^{re} matière plastique,) un composite étant réalisé par complémentarité de matières ou par complémentarité de formes et de matières dans une 1^{re} surface de contact (13) entre l'élément de fixation (11) et l'enveloppe (12) et l'élément de fixation (11) pourvu de l'enveloppe (12) étant ensuite inséré dans un outil et au moins l'enveloppe (12) étant entourée d'une pièce moulée (16) composée d'une 2^{e} mousse de particules d'une 2^{e} matière plastique, un composite réalisé par complémentarité de matières étant formé dans une 2^{e} surface de contact (17) entre l'enveloppe (12) et la pièce moulée (16).
